# EUROPEAN PATENT SPECIFICATION

(11) **EP 0 694 436 B1**
(45) Date of publication and mention of the grant of the patent: **22.04.1998**
(21) Application number: 95830310.9
(22) Date of filing: 18.07.1995
(51) Int. Cl.: B60N 2/28

(54) **Device for quick coupling of a child seat to a motor-vehicle seat**
Vorrichtung zum Schnellverbinden eines Kindersitzes mit einem Kraftwagensitz
Dispositif d'accouplement rapide d'un siège d'enfant à un siège d'un véhicule automobile

(30) Priority: 26.07.1994 IT TO940617
(43) Date of publication of application: 31.01.1996
(73) Proprietor: LEAR CORPORATION ITALIA S.p.A., 10128 Torino (IT)
(72) Inventor: Marinelli, Francesco, I-10060 San Secondo di Pinerolo (Torino) (IT)
(74) Representative: Notaro, Giancarlo

(56) References cited:
- DE-C- 4 125 959
- DE-C- 4 204 224
- DE-U- 9 208 438
- FR-A- 2 680 734

## Description

The present invention relates to a device for quick coupling of a child seat to a motor-vehicle seat (see, for example, GB-A-2 116 837, corresponding to the preamble of claim 1.)

According to the conventional art, child seats are secured to the body of the motor-vehicle with the aid of belts. This solution is unsatisfactory both from the standpoint of safety, and from the standpoint of convenience of use. As a matter of fact, in case of an impact of the luggage stored within the rear luggage compartment of the motor-vehicle against the backrest of the rear seat, as a result of a front collision of the motor-vehicle, this backrest is subject to a forward movement, with resulting danger for the occupant of the child seat, which is instead secured directly to the body of the motor-vehicle and therefore tends to oppose to said movement of the backrest. The use of belts for securing the child seat renders also the operations necessary for connecting the child seat to the motor-vehicle seat time-consuming and complicated.

Proposals have been made already for a quick-coupling arrangement for a child seat (see FR-A-2 680 734, DE-U-92 08 438 and the above-mentioned GB-A-2 116 837) which, however, seem to be all quite complicated and costly and are used for quick connection of the child seat to a base frame which, in turn, is connected to the motor-vehicle frame.

The object of the present invention is that of overcoming said drawbacks, by providing a device which enables a child seat to be connected rapidly directly to a motor-vehicle seat, with a simple, reliable and unexpensive structure. In view of achieving this object, the invention provides a connecting device of the type described above and having the characterising features set forth in claim 1.

An important difference of the invention over the Prior Art lies in that the quick-coupling means are provided to connect the child seat to the frame of the backrest of the adult seat. This assures a simple and reliable arrangement. No solution of the Prior Art uses the backrest of the adult seat to support the child seat in this way.

In a first embodiment, each engagement element is comprised of a bolt projecting rearwardly from the backrest of the child seat and said receiver element is comprised of a bush mounted within a hole formed through the backrest of the motor-vehicle seat; the locking means are comprised of a latch slidable within said backrest frame in a direction transverse to the axis of the bolt, said latch being biassed by spring means towards a position locking said bolt and being manually moveable, against the action of the spring means, towards a position for release of the bolt.

In a second embodiment, each engagement element is comprised of a bolt projecting forwardly from the backrest of the motor-vehicle seat, and said receiver element is comprised of a hole formed through the backrest of the child seat; said locking means is comprised of a latch which is slidable within the backrest of the child seat in a direction transverse to the axis of said hole and is biassed by spring means towards a position for locking said bolt and is manually moveable, against the action of the spring means, towards a position for release of this bolt. In this embodiment, each bolt has an articulated end portion, which is moveable to a position rotated by 90° with respect to the axis of the bolt for being received within a cooperating seat formed in the front face of the backrest of the motor-vehicle seat, when the child seat is not connected to this backrest. Thus, when the child seat is not used, the connecting bolts do not project from the backrest and do not cause therefore any disturb to the passengers.

In a further embodiment, each quick coupling is a coupling of the type known per se used for safety belts, wherein the engagement element is a tab and the receiver element is a buckle for safety belts. In a first variant, the buckle projects rearwardly from the child seat and the tab is fixed to the backrest frame of the motor-vehicle seat and projects forwardly from a hole formed through the backrest. In a second variant, the buckle is arranged at the rear of the child-seat with its receiving aperture facing downwardly, and the tab is fixed to the backrest frame of the motor-vehicle seat and projects forwardly from the gap between the cushion and the backrest of the motor-vehicle seat and has an end portion directed upwardly.

Due to these features, the invention enables an easy and quick connection of the child seat, while providing a connection directly to the structure of the motor-vehicle seat, with resulting advantages also from the standpoint of safety.

Further features and advantages of the invention will become apparent from the following description with reference to the annexed drawings given purely by way of non limiting example, in which:
- figure 1 is a perspective view of a child seat according to a first embodiment of the device according to the invention,
- figure 2 is a cross-sectional view at an enlarged scale of the device associated with the child seat of figure 1,
- figure 3 is a cross-sectional view along line III-III of figure 2,
- figure 4 is a cross-sectional view taken along line IV-IV of figure 3,
- figure 5 shows a variant of figure 2,
- figure 6 is a cross-sectional view taken along line VI-VI of figure 5,
- figure 7 is a cross-sectional view taken along line VII-VII of figure 6,
- figure 8 is a cross-sectional view taken along line VIII-VIII of figure 6,
- figure 9 shows a further variant of figure 2,
- figure 10 shows a cross-sectional view taken along line X-X of figure 9,
- figure 11 shows a further variant of figure 2,
- figures 12, 13 are views according to arrows XII and XIII of figure 11,
- figure 14 is a diagrammatic side elevational view of a further variant,
- figure 15 is a partial elevational back view according to arrow XV of figure 14,
- figures 16-19 show another embodiment, and
- figures 20-22 show a variant of the embodiment of figures 16-19.

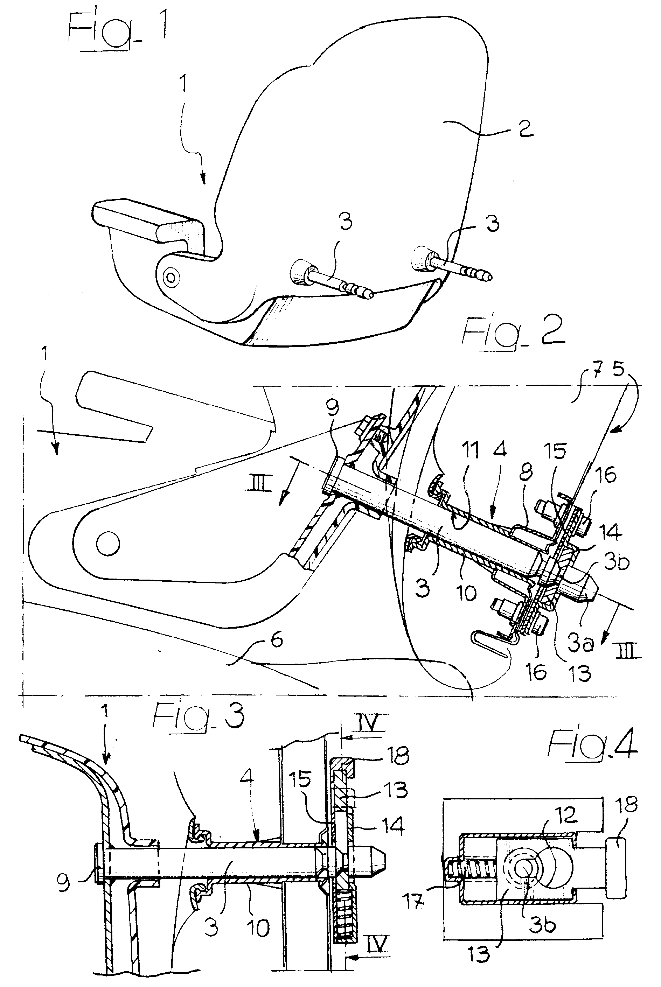

Referring to figures 1-4, numeral 1 generally designates a child seat comprising a backrest 2 from which there project rearwardly two cylindrical bolts 3, each of which is for cooperation with a receiver element 4, which will be described more in detail in the following, with which it constitutes a quick coupling.

With reference in particular to figure 2, numeral 5 generally designates a motor-vehicle seat, for example a rear seat, comprising a cushion 6 and a backrest 7 provided with a metal frame 8. Each cylindrical bolt has one end 9 rigidly connected to the structure of the child seat 1, and is adapted to be received in a bush 10, forming part of said receiver element 4, which is inserted in a hole 11 formed through the backrest 7. Each bolt 3 has, adjacent to its end nose 3a, a narrowed neck 3b with engages the narrow portion of an aperture 12 having the shape of a keyhole formed in a plate latch 13. Latch 13 is slidably mounted between two plates 14, 15 fixed to frame 8 of the backrest of the seat of the motor-vehicle by screws 16. It is moveable in a direction transverse to the axis of the bolt 3 and is biassed by a helical spring 17 towards the position shown in figure 4, in which the narrowed neck engages the narrow portion of aperture 12, so that bolt 3 is axially locked within bush 10, since the end nose 3a can not be extracted from aperture 12. The end of the plate latch 13 opposite to spring 17 is provided with a push-bottom 18 which can be operated manually for moving latch 13, against the action of spring 17 towards a position in which the longer portion of aperture 12 is arranged coaxially with the narrow neck 3b, so that the end nose 3a is free to be withdrawn from aperture 12.

In order to connect the child seat 1 to the motor-vehicle seat 5, it is sufficient to operate push-bottom 18 so as to arrange the latches 13 in the opened position, in which bolts 3 can be received fully within bushes 10, whereupon push-bottoms 18 may be realised, so that each spring 17 brings the respective latch 13 to its position for locking the corresponding bolt 3. In order to dismantle the child seat, it is sufficient to operate inversely, by pushing push-bottom 18 so as to bring latches 13 to their release positions.

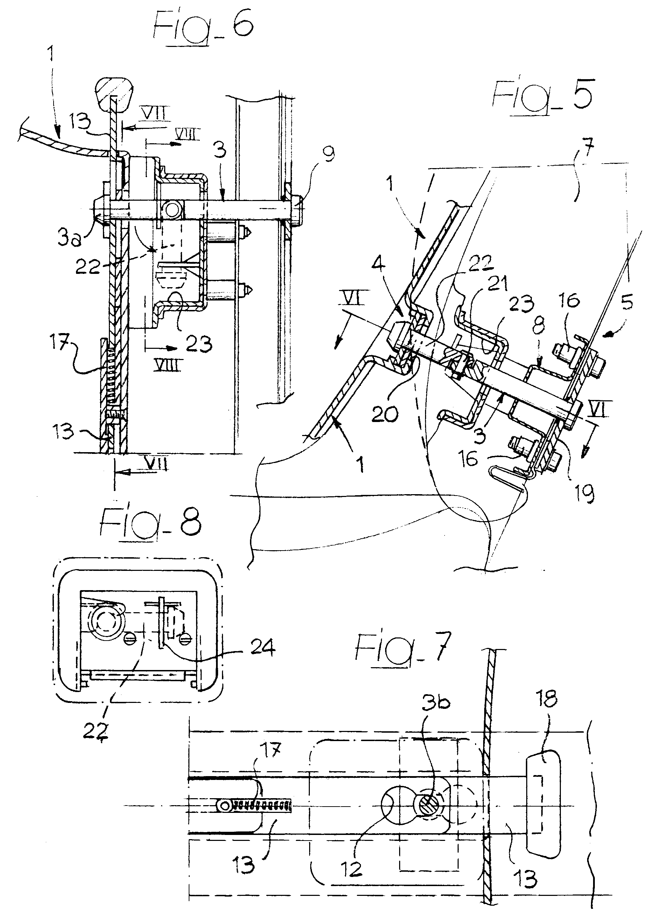

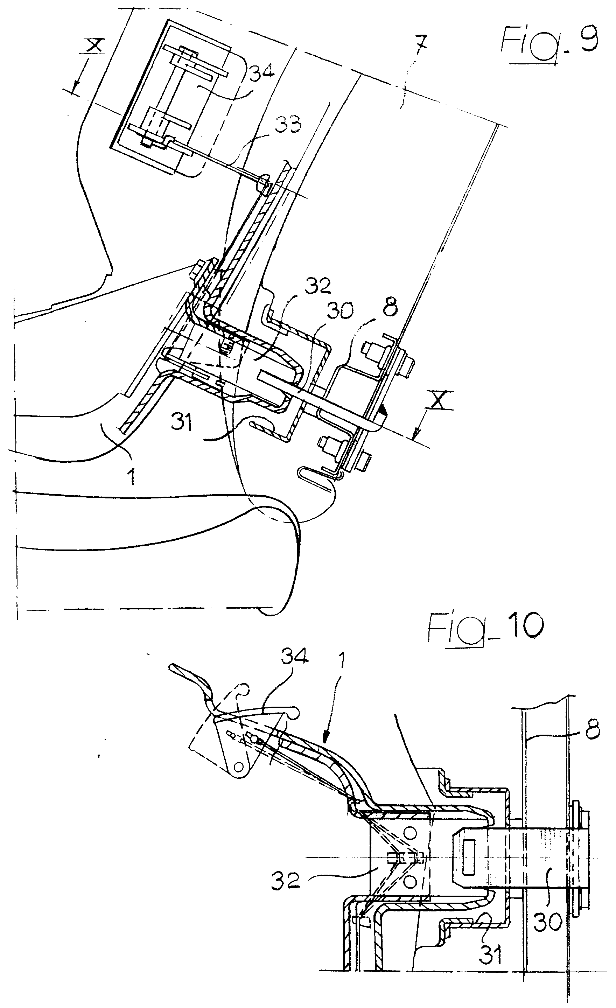

In the embodiment shown in figures 5 through 8, parts corresponding to those of figures 1-4 are indicated by the same reference numerals. In this case, the main difference with respect to the solution of figures 1-4 lies in that each locking bolt 3 is fixed to the backrest of the motor-vehicle seat, whereas the corresponding receiver element 4 is provided on the child seat 1. More in detail, in this case, in the structure of the backrest of the child seat 1 there are slidably mounted two latch plates 13 which project on both sides of seat 1 with ends provided with push bottoms 18. Also in this case, each plate 13 has an aperture 12 shaped as a keyhole with a narrow portion which is able to engage a narrow neck 3b preventing withdrawal of the end nose 3a. The opposite end of each bolt 3 is welded to a plate 19 fixed by screws 16 to frame 8 of the backrest 7 of the motor-vehicle seat 5. In these embodiments, each bolt 3 projects forwardly from backrest 7 and engages a hole 20 formed in the backrest of the child seat 1. When the child seat 1 is not mounted, bolts 3 would project from the front surface of backrest 7 disturbing thereby the occupants. To avoid this inconvenience, each bolt 3 is articulated around an intermediate axis 21, so that an end portion 22 thereof may be rotated by 90° with respect to the axis of bolt 3 (to the position indicated by dotted line in figures 6 and 8) where it is arranged inside a seat 23 formed in the front surface of the backrest 7 and is held by a fork element 24.

The variant shown in figures 9, 10 relates to the case in which each quick coupling is of the type known per se normally used for safety belts. More precisely, each quick coupling has a tab 30 which is welded to frame 7 of the backrest of the motor-vehicle seat and projects in a seat 31 formed forwardly thereto said tab being adapted to be snap received into a receiver element 32 of the type of a buckle of a safety belt which is fixed at the rear of the child seat 1. The inside structure of receiver element 32 is not illustrated herein in detail, since, as already indicated, it may be of the known type conventionally used for safety belts. This buckle may be, according to the conventional technique adopted in this field, provided with a device for releasing tab 30, which in this case can be operated remotely by a cable 33 ending with a driving lever 34 arranged on one side of the child seat 1.

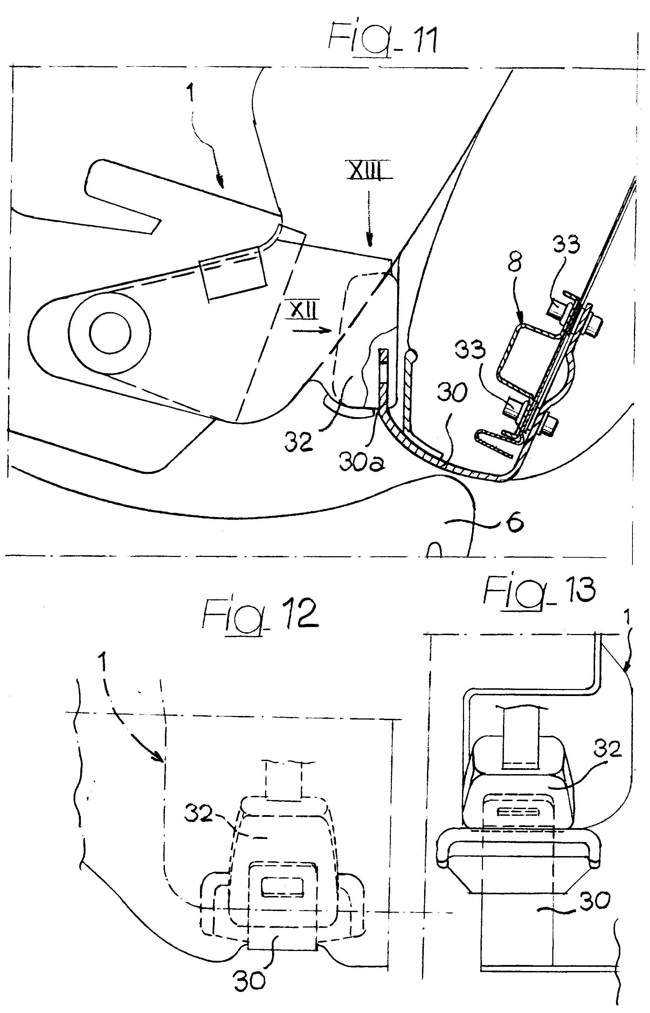

Figures 11-13 show a variant in which buckle 32 is also arranged at the rear of the child seat 1, but with its receiving aperture facing downwardly, whereas tab 30 is fixed to frame 7 by bolts 33 and projects through the space between cushion 6 and backrest 7, with an end portion 30 directed upwardly.

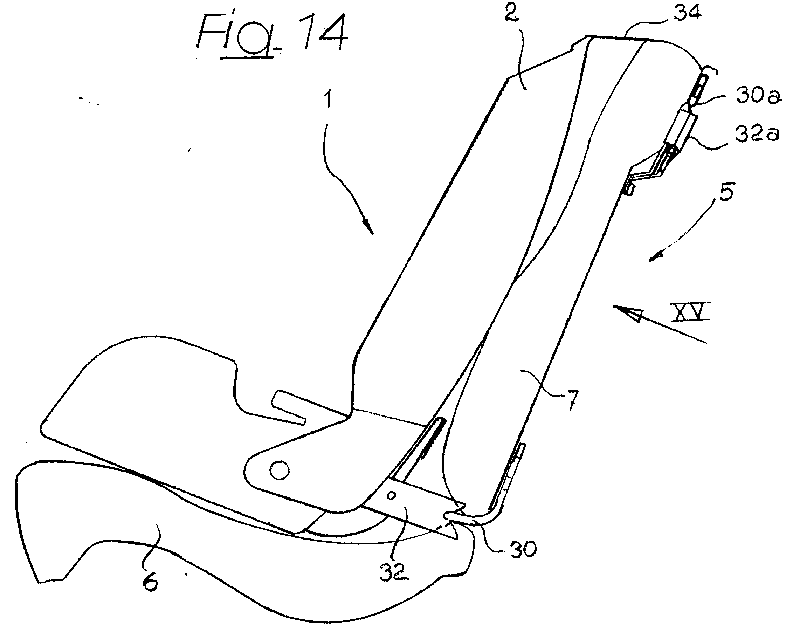

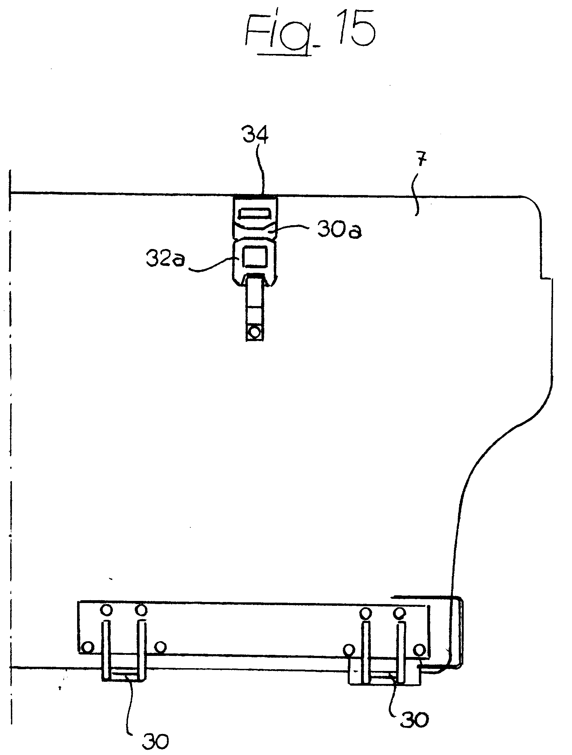

According to the variant shown in figures 14 and 15, in addition to the pair of quick couplings 30-32 similar to those already described with reference to figures 9 and 10 (or also of a different type, although with quick coupling and uncoupling) there is provided a further quick coupling unit between the top of backrest 2 of the child seat 1 and the backrest 7 of the motor-vehicle seat 5. This unit comprises a pair (as in the case of the illustrated example) or also two pairs of quick coupling members, one constituted by a receiver element 32a of the type of a buckle for safety belts, carried by the back of backrest 7 of seat 5 adjacent to its stop, and the other being constituted by a tab 30a which can be snap engaged within a buckle 32a and anchored to the end of a belt 34. This belt 34, of the type conventionally used for safety belts, is fixed at its other end to the top of backrest 2 of the child seat 1.

In the condition of engagement between tab 30a and buckle 32a, belt 34 is normally under tension.

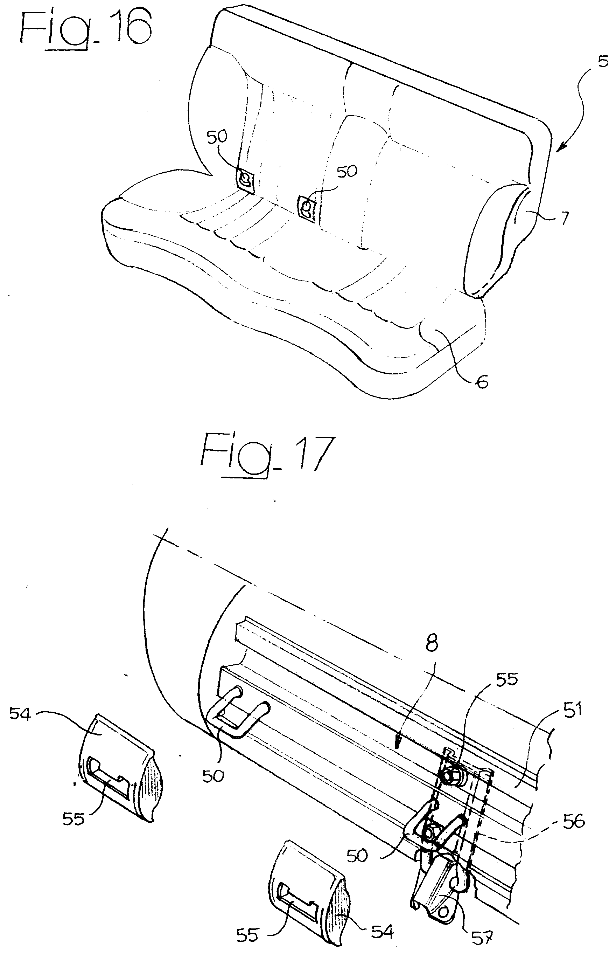

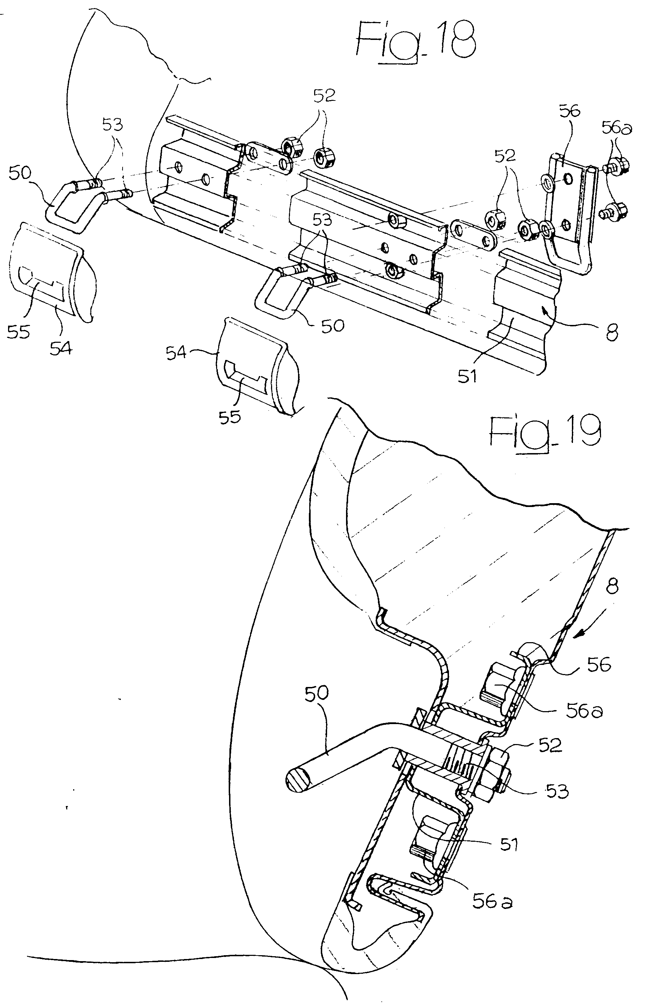

Figures 16-19 show another embodiment in which two engagement members 50 in form of U-shaped brackets are fixed to a cross-member 51 of sheet-metal forming part of the frame 8 of the backrest by nuts 52 screwed onto threaded end portions 53 of brackets 50. Brackets 50 project forwardly through apertures provided in the backrest padding and are covered by plastic caps 54 with apertures 55 to allow receiver elements of any type provided on the child seat to reach the engagement elements 50. The receiver elements for example may have the structure of a latch mechanism of the conventional type used in motor-vehicle doors. Cross-member 8 on its turn is fixed by bolts 56a to U-shaped brackets 56 which are pivotally mounted within brackets 57 fixed to the motor-vehicle body, to allow tilting of the rear seat backrest.

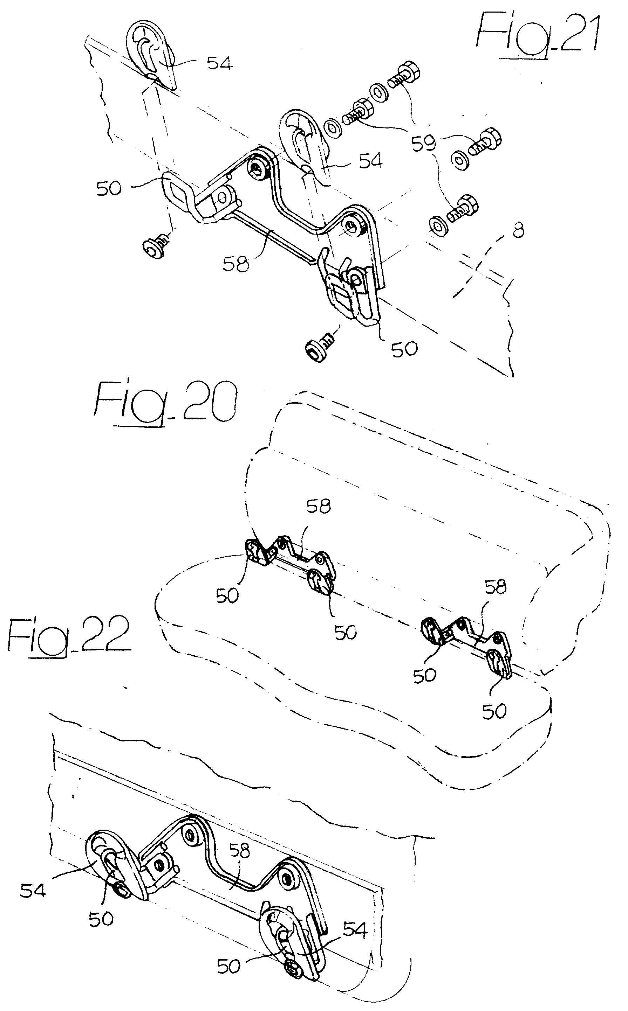

Figures 20-22 show a variant of the embodiment of figures 16-19, which can be used in case the device according to the invention has to be adapted on a motor-vehicle originally produced without such a device.

The main difference with respect to the embodiment of figures 16-19 is that in this case both U-shaped brackets 50 are carried by a common plate 58 which is fixed by bolts 59 to cross-member 8.

Clearly, while the principle of the invention remains the same, the details of construction and the embodiment may vary with respect to what has been described and illustrated purely by way of example, if not thereby departing from the scope of the present invention as defined in the appended claims.

## Claims

1. Device connecting a child seat (1) to a motor-vehicle seat (5), comprising at least two couplings for connection of the child seat to the frame of the motor-vehicle seat, characterized in that said couplings are in form of quick couplings (3, 4) each comprising:
- a receiver element (4) and an element (3) for engaging the receiver element (4), which are carried by either of the child seat (1) and the frame (8) of the backrest (7) of the motor-vehicle seat (5) respectively; and
- releasable locking means (13, 32), having a first position for locking each engaging element (3) within the corresponding receiver element (4) and a second position for releasing the engaging element from the receiver element.

2. Device according to claim 1, characterized in that each engaging element (3) is constituted by a bolt projecting rearwardly from the backrest of the child seat (1), said receiver element (4) being comprised of a bush (10) inserted within a hole (11) formed through the backrest (7) of the motor-vehicle seat (5) and said locking means is constituted by a latch (13) slidable within said frame (8) of the backrest (7) in a direction transverse to the axis of said bolt (3) said latch (13) being biassed by spring means (17) towards a position for locking said bolt (3) and being manually moveable, against the action of said spring means (17), towards a position for releasing said bolt (3).

3. Device according to claim 1, characterized in that each engaging element (3) is constituted by a bolt projecting forwardly from the backrest (7) of the motor-vehicle seat (5) and said receiver element (4) is constituted by a hole (20) formed through the backrest of the child seat (1); said locking means being comprised of a latch (13) which is slidable within the backrest of the child seat (1) in a direction transverse to the axis of said hole (20), and is biassed by spring means (17) towards a position for locking said bolt (3) and is manually moveable, against the action of said spring means (17) towards a position for releasing said bolt (3), the latter having an articulated end portion (22) which is moveable to a position rotated by 90° with respect to the axis of bolt (3) to be received within a corresponding seat (23) formed in the front surface of backrest (7) of the motor-vehicle seat (5), when the child seat (1) is not connected to said backrest (7).

4. Device according to claim 1, characterized in that each quick coupling is a coupling of the type known per se used for safety belts, in which the engaging element is a tab (30) and the receiver element is a buckle for safety belts (32).

5. Device according to claim 4, characterized in that the buckle (32) projects rearwardly from the child seat (1) and the tab (30) is fixed to the frame (8) of the backrest (7) of the motor-vehicle seat and projects forwardly from a hole formed through said backrest (7).

6. Device according to claim 4, characterized in that the buckle (32) is arranged at the rear of the child seat (1) with its receiving aperture facing downwardly and the tab (30) is fixed to the frame (8) of the backrest (7) of the motor-vehicle seat (5) and projects forwardly from the gap between the cushion (6) and the backrest (7) of the motor-vehicle seat (5), and has an end portion (30a) directed upwardly.

7. Device according to claim 4, characterized in that the buckle (32a) is carried at the rear of the backrest (7) of the motor-vehicle seat (5), adjacent to the top thereof, and the tab (30a) is connected to a belt (34) of a type for safety belts, anchored to the top portion of the backrest (2) of the child seat (1).

8. Device according to claim 1, characterized in that said engagement element is a U-shaped bracket (50) fixed to a cross-member (58) forming part of the frame (8) of the backrest (7) of the seat (5).

## Patentansprüche

1. Vorrichtung zur Befestigung eines Kindersitzes (1) an einem Sitz (5) eines Kraftfahrzeuges, mit zumindest zwei Kupplungen zur Verbindung des Kindersitzes mit dem Rahmen des Sitzes des Kraftfahrzeuges, dadurch gekennzeichnet, daß die Kupplungen in Form von Schnellkupplungen ausgeführt sind, von denen jede umfaßt:
ein Aufnahmebauteil (4) und ein Bauteil (3), welches mit dem Aufnahmebauteil (4) in Eingriff gelangt, wobei diese beiden Bauteile (3, 4) am Kindersitz (1) und an dem Rahmen (8) der Rückenlehne (7) des Sitzes (5) des Kraftfahrzeuges angeordnet sind, so daß eines der Bauteile (3, 4) am Kindersitz (1) und das andere Bauteil (3, 4) am Sitz (5) angeordnet ist; und
eine freigebbare Verriegelungseinrichtung (13, 32), die eine erste Position aufweist, um jedes der Eingriffbauteile (3) innerhalb des zugeordneten Aufnahmebauteils (4) zu verriegeln und die eine zweite Position aufweist, um das Eingriffsbauteil (3) von dem Aufnahmebauteil (4) freizugeben.

2. Vorrichtung nach Anspruch 1, dadurch gekennzeichnet, daß jedes Eingriffsbauteil (3) einen Bolzen aufweist, der von der Rückenlehne des Kindersitzes (1) nach hinten vorsteht, wobei das Aufnahmebauteil (4) eine Hülse (10) aufweist, die in einer Öffnung (11) aufgenommen ist, die in der Rückenlehne (7) des Sitzes (5) des Kraftfahrzeuges ausgebildet ist, wobei die Verriegelungseinrichtung einen Riegel (13) aufweist, der innerhalb des Rahmens (8) der Rückenlehne (7) in einer Richtung quer zu der Achse des Bolzens (3) verschiebbar angeordnet ist, wobei der Riegel (13) durch eine Feder (17) unter Vorspannung gehalten ist, und zwar in Richtung einer Position zur Verriegelung des Bolzens (3), sowie der Riegel (13) manuell verschiebbar ist, nämlich gegen die Wirkung der Feder (17), und zwar in eine Richtung zu einer Position, in der der Bolzen (3) freigegeben ist.

3. Vorrichtung nach Anspruch 1, dadurch gekennzeichnet, daß jedes Eingriffsbauteil (3) einen Bolzen aufweist, der von der Rückenlehne (7) des Sitzes (5) des Kraftfahrzeuges nach vorne vorsteht, wobei das Aufnahmebauteil (4) eine Öffnung (20) aufweist, die in der Rückenlehne des Kindersitzes (1) ausgebildet ist; die Verriegelungseinrichtung weist einen Riegel (13) auf, der innerhalb der Rückenlehne des Kindersitzes (1) in einer Richtung quer zu der Achse der Öffnung (20) verschiebbar angeordnet ist, wobei der Riegel (13) durch eine Feder (17) unter Vorspannung gehalten ist, und zwar in Richtung einer Position zur Verriegelung des Bolzens (3), sowie der Riegel (13) manuell verschiebbar ist, nämlich gegen die Wirkung der Feder (17), und zwar in eine Richtung zu einer Position, in der der Bolzen (3) freigegeben ist, wobei der Bolzen (3) einen gelenkig verbundenen Endabschnitt (22) aufweist, der in eine Position verlagerbar ist, die relativ zu der Achse des Bolzens (3) um 90° verdreht ist, um innerhalb einer zugehörigen Aufnahme (23) aufgenommen zu sein, die in der Vorderfläche der Rückenlehne (7) des Sitzes (5) des Kraftfahrzeuges ausgebildet ist, wenn der Kindersitz (1) nicht an der Rückenlehne (7) befestigt ist.

4. Vorrichtung nach Anspruch 1, dadurch gekennzeichnet, daß jede Schnellkupplung eine Kupplung ist, die an sich als Kupplungstyp für Sicherheitsgurte bekannt ist, und bei der das Eingriffsbauteil ein flacher Stecker (30) ist sowie das Aufnahmebauteil eine Schnalle (32) für Sicherheitsgurte ist.

5. Vorrichtung nach Anspruch 4, dadurch gekennzeichnet, daß die Schnalle (32) von dem Kindersitz (1) nach hinten vorsteht und daß der Stecker (30) an dem Rahmen (8) der Rückenlehne (7) des Sitzes des Kraftfahrzeuges fixiert ist und nach vorne vorsteht, durch eine Öffnung, die in der Rückenlehne (7) ausgebildet ist.

6. Vorrichtung nach Anspruch 4, dadurch gekennzeichnet, daß die Schnalle (32) an der Rückseite des Kindersitzes (1) angeordnet ist, wobei deren Aufnahmeöffnung nach unten zeigt, sowie der Stecker (30) an dem Rahmen (8) der Rückenlehne (7) des Sitzes (5) des Kraftfahrzeuges fixiert ist und nach vorne vorsteht, nämlich durch einen Spalt zwischen dem Sitz (6) und der Rückenlehne (7) des Sitzes (5) des Kraftfahrzeuges, wobei der Stecker (30) einen Endabschnitt (30a) aufweist, der nach oben gerichtet ist.

7. Vorrichtung nach Anspruch 4, dadurch gekennzeichnet, daß die Schnalle (32a) an der Rückseite der Rückenlehne (7) des Sitzes (5) des Kraftfahrzeuges angeordnet ist, und zwar benachbart dem oberen Ende davon, wobei der Stecker (30a) mit einem Gurt (34) verbunden ist, der vom Typ Sicherheitsgurt ist, und der an dem oberen Abschnitt der Rückenlehne (2) des Kindersitzes (1) verankert ist.

8. Vorrichtung nach Anspruch 1, dadurch gekennzeichnet, daß das Eingriffsbauteil ein U-förmiger Träger (50) ist, der an einem Querträger (58) fixiert ist, der einen Teil des Rahmens (8) der Rückenlehne (7) des Sitzes (5) bildet.

## Revendications

1. Dispositif de raccordement d'un siège d'enfant (1) à un siège de véhicule à moteur (5), comprenant au moins deux accouplements destinés à assurer la connexion du siège d'enfant au châssis du siège de véhicule à moteur, caractérisé en ce que les accouplements sont sous forme d'accouplements rapides (3, 4) comprenant chacun :
- un élément récepteur (4) et un élément (3) de coopération avec l'élément récepteur (4), qui sont supportés par le siège d'enfant (1) ou le châssis (8) du dossier (7) du siège (5) du véhicule à moteur respectivement, et
- un dispositif de blocage temporaire (13, 32) ayant une première position de blocage de chaque élément de coopération (3) dans l'élément récepteur correspondant (4) et une seconde position de libération de l'élément de coopération de l'élément récepteur.

2. Dispositif selon la revendication 1, caractérisé en ce que chaque élément de coopération (3) est constitué d'un boulon dépassant vers l'arrière du dossier du siège d'enfant (1), l'élément récepteur (4) comprenant un manchon (10) introduit dans un trou (11) formé dans le dossier (7) du siège (5) de véhicule à moteur, et le dispositif de blocage est constitué par un verrou (13) qui peut coulisser dans le châssis (8) du dossier (7) en direction transversale à l'axe du boulon (3), le verrou (13) étant rappelé par un dispositif à ressort (17) vers une position de blocage du boulon (3) et étant mobile manuellement malgré l'action du dispositif à ressort (17) vers une position de libération du boulon (3).

3. Dispositif selon la revendication 1, caractérisé en ce que chaque élément de coopération (3) est constitué par un boulon dépassant en avant du dossier (7) du siège (5) du véhicule à moteur, et l'élément récepteur (4) est constitué par un trou (20) formé dans le dossier du siège d'enfant (1), le dispositif de blocage étant formé d'un verrou (13) qui peut coulisser dans le dossier du siège d'enfant (1) en direction transversale à l'axe du trou (20) et qui est rappelé par un dispositif à ressort (17) vers une position de blocage du boulon (3) et qui est mobile manuellement, malgré la force du dispositif à ressort (17), vers une position de libération du bouton (3), ce dernier ayant une partie articulée d'extrémité (22) qui est mobile vers une position qui a tourné de 90° par rapport à l'axe du boulon (3) pour se loger dans un siège correspondant (23) formé à la surface avant du dossier (7) du siège (5) du véhicule à moteur, lorsque le siège d'enfant (1) n'est pas raccordé au dossier (7).

4. Dispositif selon la revendication 1, caractérisé en ce que chaque accouplement rapide est un accouplement de type connu utilisé pour les ceintures de sécurité, dans lequel l'élément de coopération est une patte (30) et l'élément récepteur est une bouche de ceinture de sécurité (32).

5. Dispositif selon la revendication 4, caractérisé en ce que la bouche (32) dépasse en arrière du siège d'enfant (1) et la patte (30) est fixée au châssis (8) du dossier (7) du siège du véhicule à moteur et dépasse en avant par un trou formé dans le dossier (7).

6. Dispositif selon la revendication 4, caractérisé en ce que la bouche (32) est placée à l'arrière du siège d'enfant (1) avec son orifice récepteur tourné vers le bas, et la patte (30) est fixée au châssis (8) du dossier (7) du siège (5) du véhicule à moteur et dépasse en avant par l'espace compris entre le coussin (6) et le dossier (7) du siège (5) du véhicule à moteur, et a une partie d'extrémité (30a) qui est dirigée vers le haut.

7. Dispositif selon la revendication 4, caractérisé en ce que la boucle (32a) est portée à l'arrière du dossier (7) du siège (5) du véhicule à moteur, près de sa partie supérieure, et la patte (30a) est raccordée à une sangle (34) du type utilisé pour les ceintures de sécurité, fixée à la partie supérieure du dossier (2) du siège d'enfant (1).

8. Dispositif selon la revendication 1, caractérisé en ce que l'élément de coopération est une équerre en U (50) fixée à une traverse (58) faisant partie du châssis (8) du dossier (7) du siège (5).
